# EUROPEAN PATENT APPLICATION

(11) **EP 3 508 312 A1**
(43) Date of publication of application: **10.07.2019**
(21) Application number: 17846498.8
(22) Date of filing: 29.08.2017
(51) Int. Cl.: B25J 13/00

(54) **ROBOT AND METHOD FOR OPERATING SAME**

(30) Priority: 31.08.2016 JP 2016169126
(71) Applicant: Kawasaki Jukogyo Kabushiki Kaisha, Kobe-shi, Hyogo 650-8670 (JP)
(72) Inventor: BANDO, Kenji, Hyogo 650-8670 (JP); HIRATA, Kazunori, Hyogo 650-8670 (JP)
(74) Representative: Witte, Weller & Partner Patentanwälte mbB
(86) International application number: PCT/JP2017/030964
(87) International publication number: WO 2018/043493

(57) **Abstract**

A robot is provided which includes a first arm (13A) provided with a first holding part (10A) having a contact surface formed so as to conform to the shape of an outer circumferential surface of a cylindrical workpiece (202), and a second arm (13B) provided with a second holding part (10B) formed into one of a plate shape and a bar shape.

## Description

### TECHNICAL FIELD

The present disclosure relates to a robot and a method of operating the same.

### BACKGROUND ART

Object transferring devices have been known as a device which uses a hand part provided to a tip-end part of a robot to grip and move an object (e.g., see Patent Document 1). In an object transferring device disclosed in Patent Document 1, a notch is formed in a side surface of a bucket which accommodates a group of objects to be transported by a parallel robot, and a hand part moves inside the notch to enter into the bucket smoothly.

### [Reference Document of Conventional Art]

### [Patent Document]

[Patent Document 1] JP2016-88721A

### DESCRIPTION OF THE DISCLOSURE

### [Problems to be Solved by the Disclosure]

However, in the object transferring device disclosed in Patent Document 1, in order for the hand part to enter into the bucket smoothly, since the special bucket of which the side surface is formed with the notch, there is still room for an improvement.

The present disclosure is to solve the conventional problems, and one purpose thereof is to provide a robot and a method of operating the same, which can easily hold and move an object having a cylindrical shape.

### [Summary of the Disclosure]

In order to solve the problem, a robot according to one aspect of the present disclosure includes a first arm provided with a first holding part having a contact surface formed so as to conform to the shape of an outer circumferential surface of a cylindrical workpiece, and a second arm provided with a second holding part formed into one of a plate shape and a bar shape.

Thus, the object having the cylindrical shape can be held and moved easily.

A method of operating a robot according to another aspect of the present disclosure is a method of operating a robot having a first arm and a second arm. The first arm is provided with a first holding part having a contact surface formed so as to conform to the shape of an outer circumferential surface of a cylindrical workpiece, and the second arm is provided with a second holding part formed into one of a plate shape and a bar shape. The method includes (A) operating the first arm so that the contact surface of the first holding part contacts the outer circumferential surface of the cylindrical workpiece, (B) operating the second arm so that the second holding part contacts an opening part of the cylindrical workpiece, and (C) operating at least one of the first arm and the second arm so that the first holding part and the second holding part approach each other after performing the (A) and (B).

Thus, the object having the cylindrical shape can be held and moved easily.

### [Effect of the Disclosure]

According to the robot and the method of operating the robot of the present disclosure, the object having the cylindrical shape can be held and moved easily.

### BRIEF DESCRIPTION OF DRAWINGS

Fig. 1 is a schematic view illustrating an outline configuration of a robot according to Embodiment 1.
Fig. 2 is a schematic view illustrating operation when the robot illustrated in Fig. 1 holds and conveys a cylindrical workpiece.
Fig. 3 is a functional block diagram schematically illustrating a configuration of a robot control device illustrated in Fig. 1.
Fig. 4 is a schematic view illustrating an outline configuration of a left-side side surface of a first hand part in the robot illustrated in Fig. 1.
Fig. 5 is a cross-sectional view of a first holding part in the first hand part illustrated in Fig. 4, taken along a line A-A.
Fig. 6 is a schematic view illustrating an outline configuration of a right-side side surface of a second hand part in the robot illustrated in Fig. 1.
Fig. 7 is a front view of a second holding part in the second hand part illustrated in Fig. 6.
Fig. 8 is a flowchart illustrating one example of operation of the robot according to Embodiment 1.
Fig. 9 is a schematic view illustrating a state of the robot when the robot operates in accordance with the flowchart illustrated in Fig. 8.
Fig. 10 is a schematic view illustrating a state of the robot when the robot operates in accordance with the flowchart illustrated in Fig. 8.
Fig. 11 is a schematic view illustrating a state of the robot when the robot operates in accordance with the flowchart illustrated in Fig. 8.
Fig. 12 is a schematic view illustrating an outline configuration of a first hand part of a robot of Modification 1 in Embodiment 1.
Fig. 13 is a schematic view illustrating an outline configuration of a second hand part of a robot of Modification 2 in Embodiment 1.

### MODES FOR CARRYING OUT THE DISCLOSURE

Hereinafter, one embodiment of the present disclosure is described with reference to the drawings. Note that, throughout the drawings, the same or corresponding parts are denoted with the same reference characters to omit redundant description. Moreover, throughout the drawings, elements for illustrating the present disclosure are extracted, and illustration of other elements may be omitted. Further, the present disclosure is not limited to the following embodiment.

### (Embodiment 1)

A robot according to Embodiment 1 includes a first arm provided with a first holding part having a contact surface formed so as to conform to the shape of an outer circumferential surface of a cylindrical workpiece, and a second arm provided with a second holding part formed into a plate or bar shape.

Alternatively, in the robot according to Embodiment 1, the contact surface of the first holding part may be formed so as to be inclined from one end to the other end.

Alternatively, in the robot according to Embodiment 1, an elastic member may be provided to the contact surface of the first holding part.

Alternatively, in the robot according to Embodiment 1, a protrusion may be formed in the second holding part.

Alternatively, in the robot according to Embodiment 1, a tip-end part of the second holding part may be formed in a tapered shape so that the thickness is reduced toward the tip end.

Alternatively, in the robot according to Embodiment 1, the second holding part may be formed in a plate shape, and the protrusion may be formed so as to conform to the shape of an opening part of the cylindrical workpiece when seen in a normal direction of a principal surface of the second holding part.

Alternatively, the robot according to Embodiment 1 may further include a control device which causes the first arm to operate so that the contact surface of the first holding part contacts the outer circumferential surface of the cylindrical workpiece, and the second arm to operate so that the second holding part contacts the opening part of the cylindrical workpiece, and then causes at least one of the first arm and the second arm to operate so that the first holding part and the second holding part approach each other.

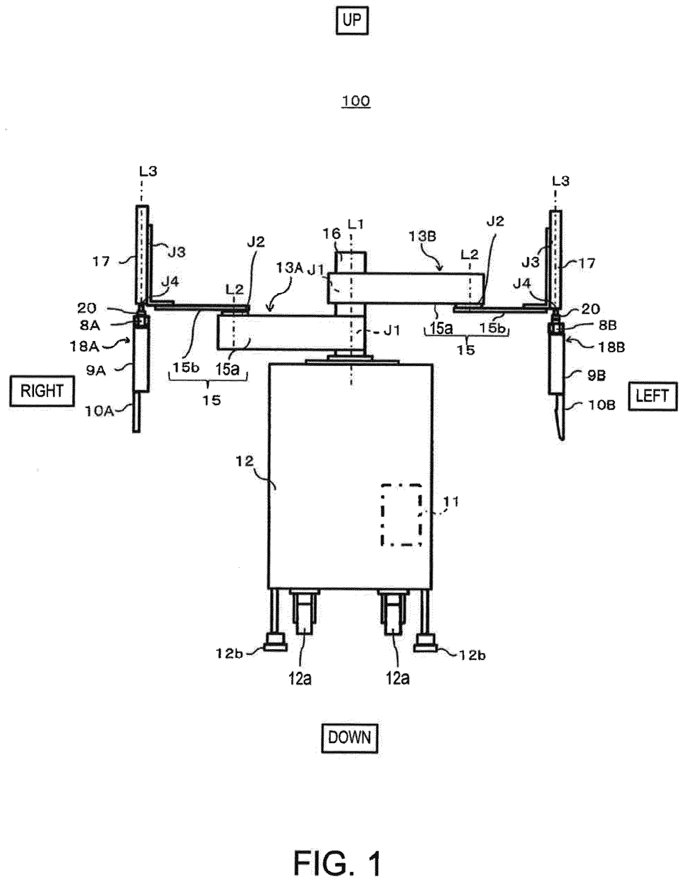

Below, one example of the robot according to Embodiment 1 is described with reference to Figs. 1 to 11.

### [Structure of Robot]

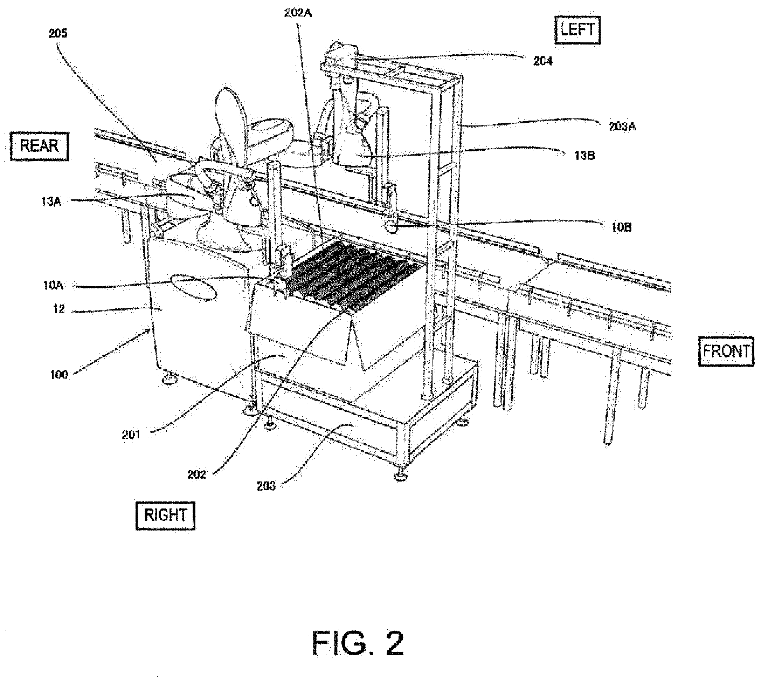

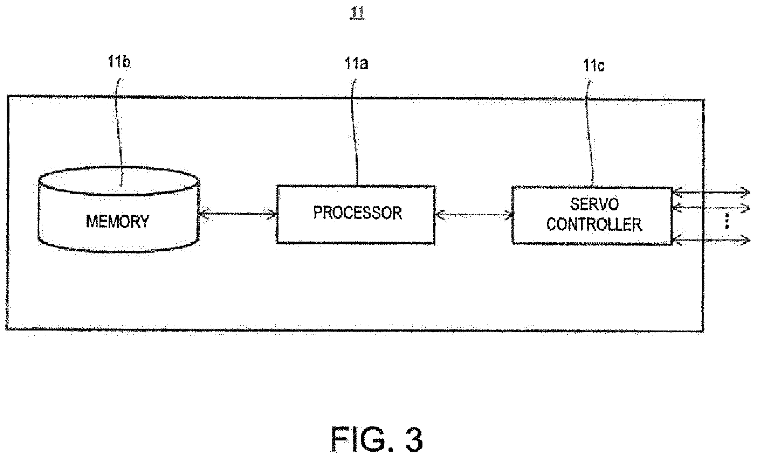

Fig. 1 is a schematic view illustrating an outline configuration of the robot according to Embodiment 1. Fig. 2 is a schematic view illustrating operation of the robot illustrated in Fig. 1 when the robot holds and conveys the cylindrical workpiece. Fig. 3 is a functional block diagram schematically illustrating a configuration of a robot control device illustrated in Fig. 1.

Note that, in Fig. 1, up-and-down directions and left-and-right directions of the robot are expressed as up-and-down directions and left-and-right directions in the figure. Moreover, in Fig. 2, the front-and-rear directions and the left-and-right directions of the robot are expressed as front-and-rear directions and left-and-right directions in the figure.

As illustrated in Figs. 1 and 2, the robot 100 according to Embodiment 1 includes a first arm 13A and a second arm 13B, and a control device 11. The robot 100 is configured so that the first arm 13A and the second arm 13B hold and convey a cylindrical workpiece 202. Moreover, the robot 100 is configured so that the control device 11 executes an automatic operation of the robot 100 by being taught by an operator, necessary information using an appropriate device.

First, a configuration of each instrument disposed in a workspace where the robot 100 according to Embodiment 1 performs a work is described with reference to Fig. 2.

As illustrated in Fig. 2, in the workspace where the robot 100 according to Embodiment 1 performs a work, a box (e.g., cardboard box) 201, the workpieces 202, a pedestal 203, an imaging device 204, and a belt conveyor 205 are disposed. The box 201 is disposed on an upper surface of the pedestal 203 with the top being opened.

In an interior space of the box 201, the workpieces 202 are accommodated in a parallel stacked manner. For example, each workpiece 202 is put over sideways so that an axial center of the workpiece 202 is oriented in the left-and-right directions, and stacked workpieces 202 are accommodated in the box 201 so as to be placed in order in the front-and-rear directions. Note that, below, the stacked workpieces 202 may also be referred to as the "workpiece stacked body 202A."

The workpiece 202 is formed in a substantially cylindrical shape, one opening part is opened, and the other opening part is closed. Moreover, the workpiece 202 is formed so that the opening part area is reduced as it goes from one opening part to the other opening part. Note that, below, the other opening part may be referred to as the "bottom." Moreover, in Embodiment 1, although the workpiece 202 adopts, but not limited to, the form where it is formed in the cylindrical shape, the form where the cross-sectional shape of the workpiece 202 is formed in a polygonal shape may be adopted.

A base-end part of an inverted L-shaped support member 203A, when seen horizontally, is fixed to the front side of the upper surface of the pedestal 203. The imaging device 204 is disposed at a tip-end part of the support member 203A. The imaging device 204 is configured to image the workpieces 202 accommodated in the box 201 from above of the box 201 and the captured image information is outputted to the control device 11 of the robot 100. Note that the imaging device 204 may be disposed at the robot 100.

The belt conveyor 205 is disposed at the side of the robot 100 (here, left side), and is configured to send the workpiece 202 disposed by the robot 100 on an upper surface of the belt conveyor 205 in the front-and-rear directions.

Next, a concrete configuration of the robot 100 is described with reference to Figs. 1 and 2.

As illustrated in Fig. 1, the robot 100 includes a carriage 12. Wheels 12a and fixing parts 12b are provided on a lower surface of the carriage 12, and the robot 100 is constructed to be movable with the wheels 12a. Note that the robot 100 is fixed to the floor by the fixing parts 12b in Embodiment 1.

Moreover, a base shaft 16 is fixed to an upper surface of the carriage 12. The first arm 13A and the second arm 13B are provided to the base shaft 16 so as to be rotatable on a rotation axis L1 passing through an axial center of the base shaft 16. For example, the first arm 13A and the second arm 13B are provided with a height difference therebetween. The control device 11 is accommodated in the carriage 12. Note that the first arm 13A and the second arm 13B are configured to be operatable independently or in a mutually associated manner.

The first arm 13A includes an arm part 15, a wrist part 17, a first hand part 18A, and an attaching part 20. Similarly, the second arm 13B includes an arm part 15, a wrist part 17, a second hand part 18B, and an attaching part 20.

The arm part 15 is comprised of a first link 15a and a second link 15b, which are substantially rectangular parallelepiped, in Embodiment 1. The first link 15a is provided with a rotary joint J1 at a base-end part, and a rotary joint J2 at a tip-end part. The second link 15b is provided with a linear-motion joint J3 at a tip-end part.

The first link 15a is coupled to the base shaft 16 via the rotary joint J1 at the base-end part so that it is rotatable on the rotation axis L1 by the rotary joint J1. The second link 15b is coupled to the tip-end part of the first link 15a via the rotary joint J2 at the base-end part so that it is rotatable on a rotation axis L2 by the rotary joint J2.

The wrist part 17 is coupled to the tip-end part of the second link 15b via the linear-motion joint J3 so that it can ascend and descend with respect to the second link 15b. A rotary joint J4 is provided to a lower end part of the wrist part 17, and the attaching part 20 is provided to a lower end part of the rotary joint J4.

The attaching part 20 is configured so that the first hand part 18A or the second hand part 18B is attachable thereto and detachable therefrom. For example, the attaching part 20 has a pair of bar members which are configured to be adjustable of the distance therebetween, and the pair of bar members can pinch the first hand part 18A or the second hand part 18B to attach the first hand part 18A or the second hand part 18B to the wrist part 17. Thus, the first hand part 18A or the second hand part 18B is rotatable on a rotation axis L3 by the rotary joint J4. Note that the bar member may be bent at a tip-end part.

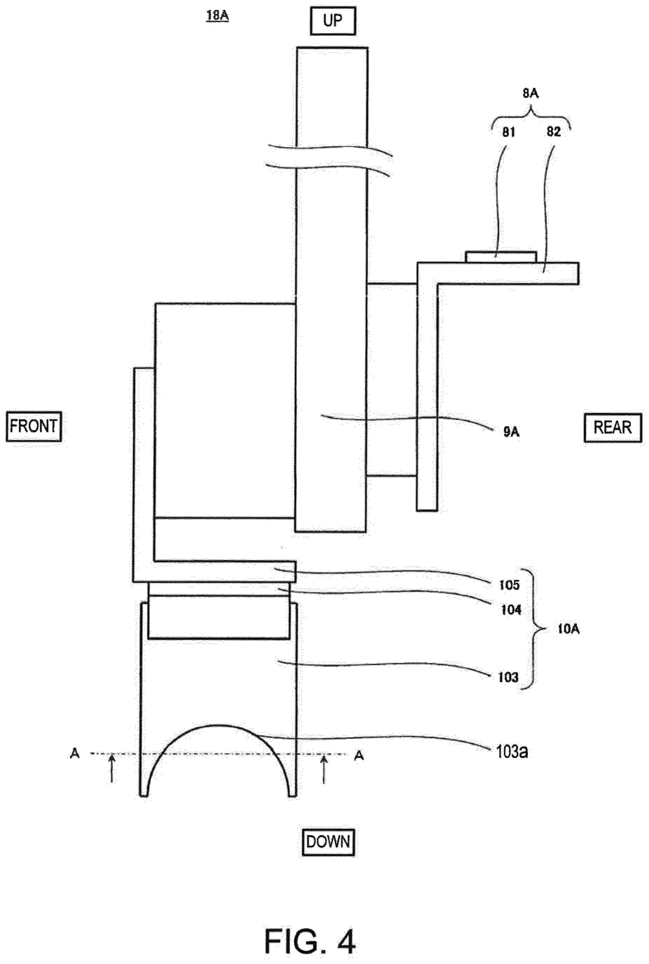

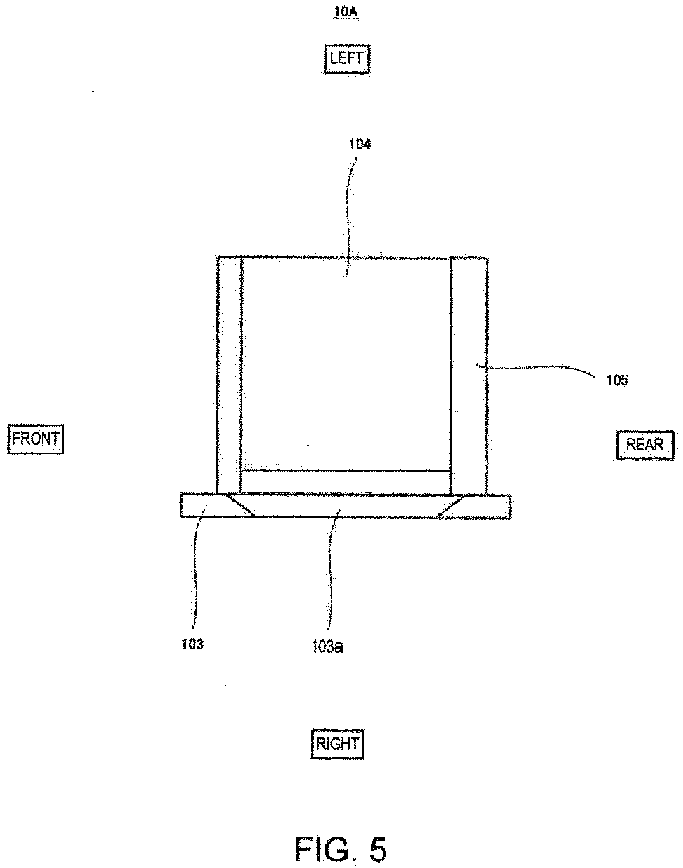

Here, the first hand part 18A of the first arm 13A is described in detail with reference to Figs. 4 and 5.

Fig. 4 is a schematic view illustrating an outline configuration of a left-side side surface of the first hand part of the robot illustrated in Fig. 1. Fig. 5 is a cross-sectional view of the first holding part of the first hand part illustrated in Fig. 4, taken along a line A-A. Note that, in Fig. 4, the up-and-down directions and the front-and-rear directions of the robot are expressed as up-and-down directions and front-and-rear directions in the figure. Moreover, in Fig. 5, front-and-rear directions and left-and-right directions of the robot are expressed as front-and-rear directions and left-and-right directions in the figure.

As illustrated in Figs. 4 and 5, the first hand part 18A of the first arm 13A is comprised of a fixing part 8A, an intermediate part 9A, and a first holding part 10A, and the fixing part 8A is connected with (fixed to) the first holding part 10A via the intermediate part 9A. Note that, in Embodiment 1, although the form in which the fixing part 8A is, but not limited to be, connected with the first holding part 10A via the intermediate part 9A is adopted, the form in which the fixing part 8A is directly connected to the first holding part 10A may be adopted.

The fixing part 8A is comprised of a first member 81 and a second member 82. The first member 81 is a part which the attaching part 20 contacts, and is herein formed in a plate shape. The second member 82 is fixed to a lower surface of the first member 81, and is formed in an inverted L-shape when seen horizontally.

The first holding part 10A is comprised of a plate-shaped third member 103, and a fourth member 104 and a fifth member 105 for connecting the third member 103 to the intermediate part 9A. Note that the third member 103 may be formed in meshes by forming perforations in a principal surface in a lattice shape and may be formed in the principal surface with slits extending in the up-and-down directions or the front-and-rear directions.

The fourth member 104 is formed in an inverted L-shape when seen in the front-and-rear directions, and the fifth member 105 is formed in an L-shape when seen in the left-and-right directions. A lower surface of the fifth member 105 is connected (fixed) to an upper surface of the fourth member 104. Moreover, the third member 103 is connected (fixed) to a right-side side surface of the fourth member 104, and a normal direction of the principal surface of the third member 103 is oriented in left-and-right directions.

A notch (contact surface) 103a is formed in a lower part of the principal surface of the third member 103. The notch 103a is formed conforming to the shape of an outer circumferential surface of the workpiece 202 when seen in the normal direction of the principal surface of the notch 103a. The phrase "conforming to the shape of the outer circumferential surface of the workpiece 202" as used herein refers to the shape which can contact the outer circumferential surface of the workpiece 202.

For example, in Embodiment 1, the notch 103a is formed in a substantially U-shape by cutting a lower end of the third member 103 in an arc shape (semicircle). That is, an inner circumferential surface of the notch 103a is formed in the arc shape (semicircle). Note that the inner circumferential surface of the notch 103a may have a polygonal shape, such as a rectangular shape or a trapezoid shape, or may have a shape having curves, such as a U-shape, an ellipse shape, and a parabola shape. Moreover, an elastic member, such as rubber, may be provided to the inner circumferential surface of the notch 103a in terms of increasing a frictional resistance with the workpiece 202.

Moreover, in Embodiment 1, as illustrated in Fig. 5, the inner circumferential surface of the notch 103a may incline so that an opening part area is reduced as it goes from one end (here, left principal surface; inner surface) to the other end (here, right principal surface; outer surface). Thus, the contact area with the outer circumferential surface of the workpiece 202 can be increased.

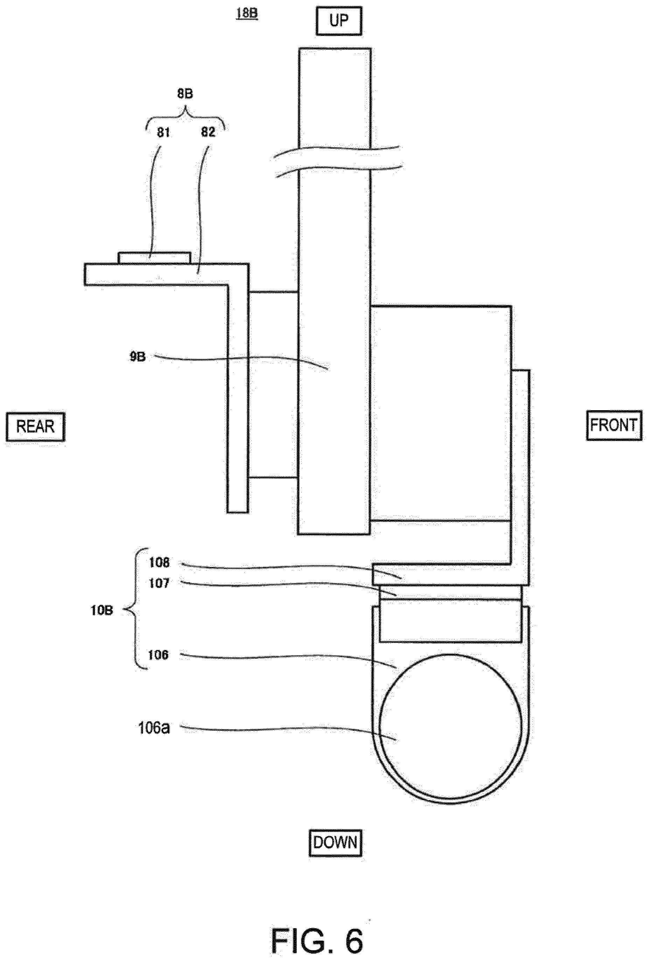

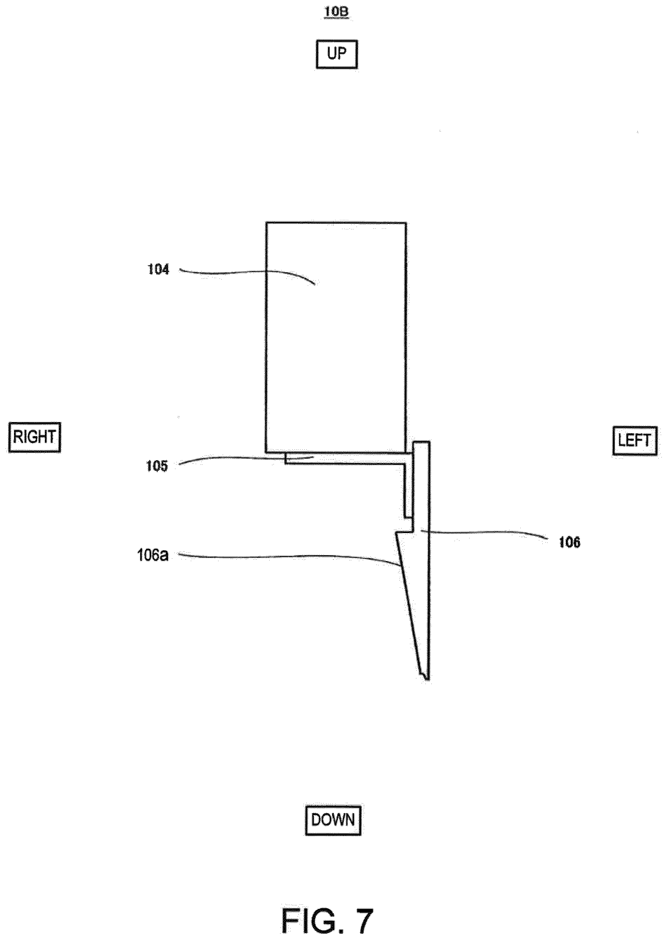

Next, the second hand part 18B of the second arm 13B is described in detail with reference to Figs. 6 and 7.

Fig. 6 is a schematic view illustrating an outline configuration of the right-side side surface of the second hand part of the robot illustrated in Fig. 1. Fig. 7 is a front view of the second holding part of the second hand part illustrated in Fig. 6. Note that, in Fig. 6, the up-and-down directions and the front-and-rear directions in the robot are expressed as up-and-down directions and front-and-rear directions in the figure. Moreover, in Fig. 7, the up-and-down directions and the left-and-right directions of the robot are expressed as up-and-down directions and left-and-right directions in the figure.

As illustrated in Figs. 6 and 7, the second hand part 18B of the second arm 13B is comprised of a fixing part 8B, an intermediate part 9B, and a second holding part 10B, and the fixing part 8B is connected with (fixed to) the second holding part 10B via the intermediate part 9B. Note that, in Embodiment 1, although the form in which the fixing part 8B is, but not limited to be, connected with the second holding part 10B via the intermediate part 9B is adopted, a form in which the fixing part 8B is directly connected to the second holding part 10B may be adopted.

The fixing part 8B is comprised of a first member 81 and a second member 82. The first member 81 is a part where the attaching part 20 contacts, and is herein formed in a plate shape. The second member 82 is fixed to a lower surface of the first member 81, and is formed in an inverted L-shape when seen horizontally.

The second holding part 10B is comprised of a plate-shaped sixth member 106, a seventh member 107 and an eighth member 108 for connecting the sixth member 106 to the intermediate part 9B. Note that the sixth member 106 may be formed in meshes by forming perforations in a principal surface in a lattice shape and may be formed in the principal surface with slits extending in the up-and-down directions or the front-and-rear directions.

The seventh member 107 is formed in an inverted L-shape when seen in the front-and-rear directions, and the eighth member 108 is formed in an L-shape when seen in the left-and-right directions. A lower surface of the eighth member 108 is connected (fixed) to an upper surface of the seventh member 107. Moreover, the sixth member 106 is connected (fixed) to a left-side side surface of the seventh member 107, and a normal direction of the principal surface of the sixth member 106 is oriented in the left-and-right directions.

A lower end part (tip-end part) of the principal surface of the sixth member 106 is formed in an arc shape (semicircle) when seen in the normal direction of the principal surface, and is formed so as to be reduced in the thickness as it goes downward (tip-end side).

Moreover, a protrusion 106a is disposed at a lower part of one principal surface (here, right principal surface; inner surface) of the sixth member 106. The protrusion 106a is formed so as to conform to the shape of the opening part (here, one opening part) of the workpiece 202 when seen in the normal direction of the principal surface of the sixth member 106. Here, the phrase "formed conforming to the shape of the opening part of the workpiece 202" as used herein refers to that it can contact an inner circumferential surface of the opening part of the workpiece 202.

In Embodiment 1, although the protrusion 106a is, but not limited to be, formed in a circular shape when seen in the normal direction of the principal surface of the sixth member 106, it may be formed in an arc shape, a U-shape, or a polygonal shape. Moreover, the protrusion 106a may be formed so that the thickness is reduced as it goes downwardly.

Note that, in Embodiment 1, although the form in which the first arm 13A and the second arm 13B have, but not limited to have, substantially the same configuration except for the first hand part 19A and the second hand part 19B, a form in which the first arm 13A and the second arm 13B have different configurations of the arm part 15 and the wrist part 17 may be adopted.

Moreover, each of the joints J1-J4 of the first arm 13A and the second arm 13B is provided with a drive motor as one example of an actuator (not illustrated) which relatively rotates or ascends and descends the two members connected via the joint, the drive motor may be a servo motor which is servo-controlled by the control device 11, for example. Moreover, each of the joints J1-J4 is provided with a rotation sensor (not illustrated) which detects the rotational position of the drive motor, and a current sensor (not illustrated) which detects the current which controls the rotation of the drive motor. The rotation sensor may be an encoder, for example.

As illustrated in Fig. 3, the control device 11 includes a processor 11a, such as a CPU, a memory 11b, such as a ROM and/or a RAM, and a servo controller 11c. The control device 11 is a robot controller provided with a computer, such as a microcontroller, for example.

Note that the control device 11 may be comprised of a single control device 11 which carries out a centralized control, or may be comprised of a plurality of control devices 11 which collaboratively carry out a distributed control. Moreover, in Embodiment 1, although the memory 11b is, but not limited to be, disposed in the control device 11, the memory 11b may be provided separately from the control device 11.

The memory 11b stores information, such as a basic program as the robot controller, and various fixed data. The processor 11a controls various operations of the robot 100 by reading and executing software, such as the basic program, stored in the memory 11b. That is, the processor 11a generates a control command for the robot 100, and then outputs the command to the servo controller 11c. The servo controller 11c controls driving of the servo motors corresponding to the joints J1-J4 of each arm 13 of the robot 100 based on the control command generated by the processor 11a.

Note that, in Embodiment 1, although the robot 100 is, but not limited to be, a horizontal articulated robot, the robot 100 may be a vertical articulated robot. Moreover, the configuration of the robot 100 described above is one example, but the configuration of the robot 100 is not limited to this and may be changed suitably according to the types of the work, the workspace, etc. which are carried out using the robot 100.

### [Operation and Effects of Robot]

Next, operation and effects of the robot 100 according to Embodiment 1 are described with reference to Figs. 1 to 11. Note that, below, operation of taking out or extracting the workpieces 202 (correctly, the workpiece stacked body 202A) accommodated in the box 201, and placing them on the belt conveyor 205 is described. Moreover, the following operation is performed by the processor 11a of the control device 11 reading the program stored in the memory 11b.

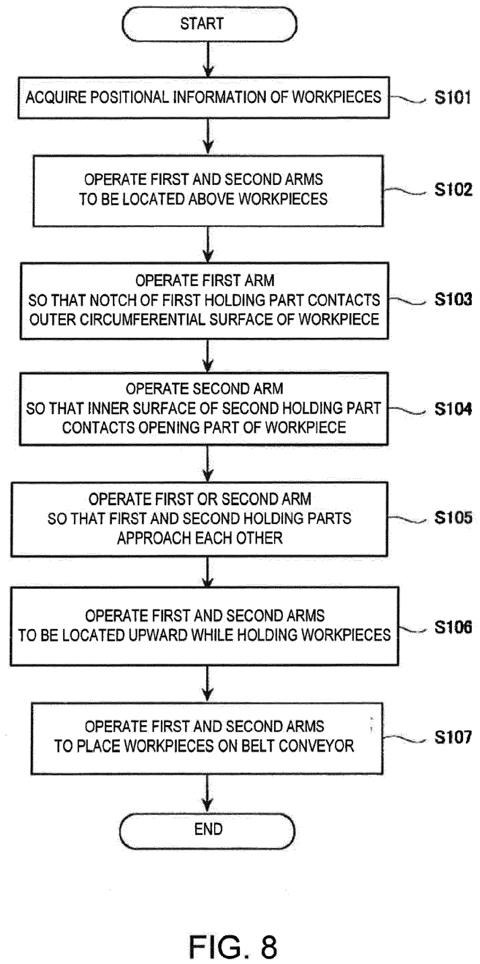

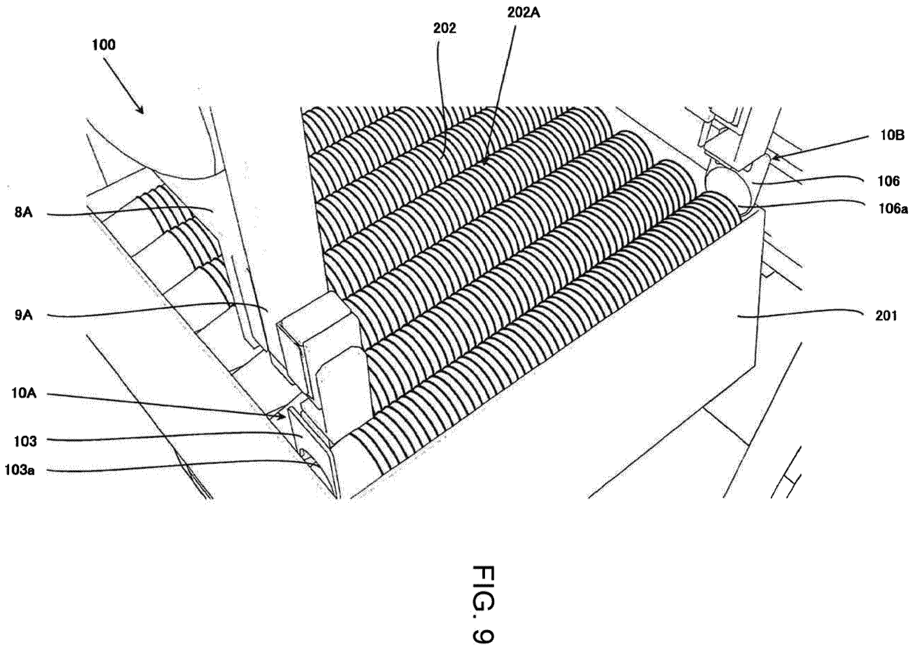

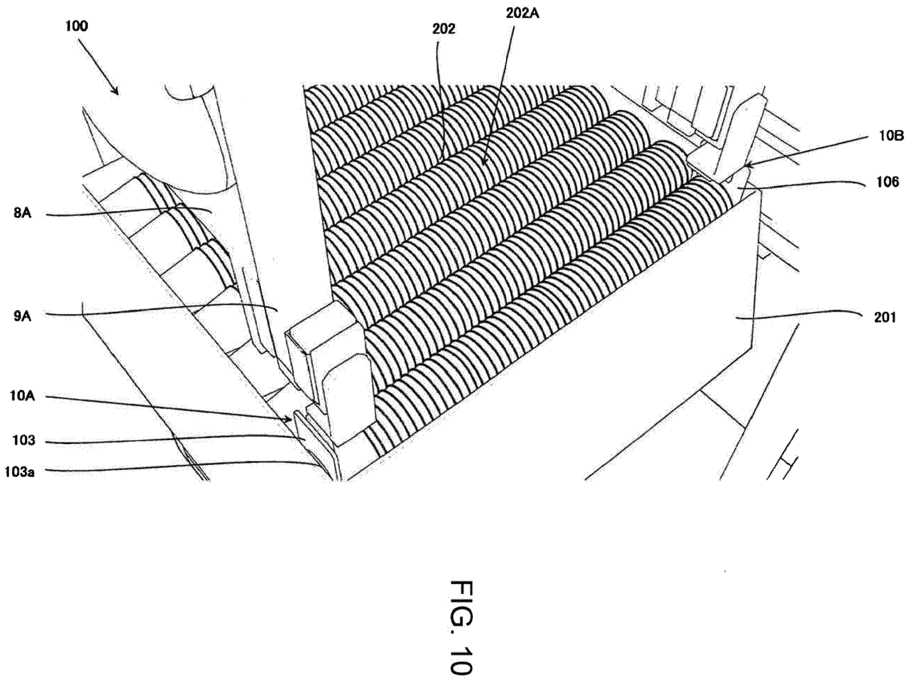

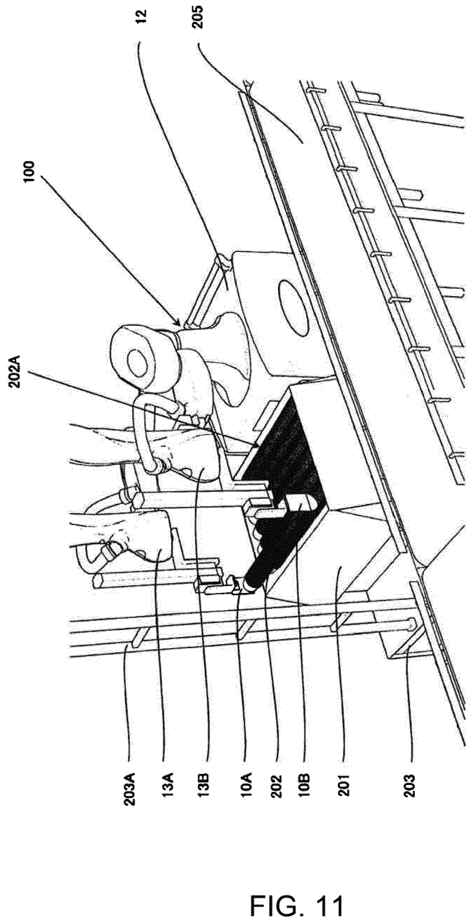

Fig. 8 is a flowchart illustrating one example of the operation of the robot according to Embodiment 1. Figs. 9 to 11 are schematic views illustrating states of the robot when the robot operates in accordance with the flowchart illustrated in Fig. 8. For example, Fig. 9 is a perspective view illustrating a state where the first arm and the second arm which are located above the workpieces descend to contact the workpieces. Fig. 10 is a perspective view illustrating a state where the first holding part of the first arm and the second holding part of the second arm grip the workpieces. Fig. 11 is a perspective view illustrating a state where the first arm and the second arm ascend, while the first holding part and the second holding part are maintaining holding the workpieces.

First, as illustrated in Fig. 2, suppose that the box 201 where the workpieces 202 are accommodated is disposed in front of the robot 100, and the belt conveyor 205 is disposed at the side of the robot 100. In addition, suppose that an instructive information indicative of executing an operation to take out the workpiece 202 accommodated in the box 201 and place the workpiece 202 on the belt conveyor 205 is inputted into the control device 11 via an input device (not illustrated) by the operator.

Then, as illustrated in Fig. 8, the control device 11 acquires the image information which is imaged by the imaging device 204, and then acquires the positional information of the workpieces 202 accommodated in the box 201 based on the acquired image information (Step S101).

Next, based on the positional information of the workpieces 202 acquired at Step S101, the control device 11 operates the first arm 13A and the second arm 13B so that they are located above the workpieces 202 (Step S102).

For example, the control device 11 operates the first arm 13A so that the first holding part 10A is located above an outer circumferential surface of the workpiece 202 located rightmost, among the workpiece stacked body 202A (e.g., the workpiece stacked body 202A located frontmost). Here, the control device J1 may operate the first arm 13A so that the first holding part 10A is located above an outer circumferential surface near the other opening part (bottom) of the workpiece 202.

On the other hand, the control device 11 operates the second arm 13B so that the second holding part 10B is located above one opening part of the workpiece 202 located leftmost, among the workpiece stacked body 202A (e.g., the workpiece stacked body 202A located frontmost).

Next, the control device 11 operates (descends) the first arm 13A so that the inner circumferential surface of the notch 103a of the first holding part 10A contacts the outer circumferential surface of the workpiece 202 (Step S103; see Figs. 9 and 10).

On the other hand, the control device 11 operates (descends) the second arm 13B so that the inner surface of the second holding part 10B contacts one opening part of the workpiece 202 (Step S104; see Figs. 9 and 10). Here, the control device 11 may operate the second arm 13B so that the principal surface of the protrusion 106a of the sixth member 106 of the second arm 13B slides on one opening part end of the workpiece 202.

Note that, after execution of the operation (processing) of Step S103, the control device 11 may execute the operation (processing) of Step S104, or may simultaneously execute the operations of Steps S103 and S104. Alternatively, the control device 11 may execute the operation of Step S103 after execution of the operation of Step S104.

Next, the control device 11 operates at least one of the arms (the first arm 13A or the second arm 13B) so that the first holding part 10A and the second holding part 10B approach each other (Step S105).

Thus, when the first holding part 10A presses one opening part of the workpiece 202 to the other opening part (here, right side), the pressing force is received by the inner surface of the second holding part 10B, thereby increasing the frictional resistance between the inner surface of the second holding part 10B and the outer circumferential surface of the workpiece 202. Moreover, when the second holding part 10B presses the other opening part of the workpiece 202 to one opening part (here, left side), the pressing force is received by an inner circumferential surface of the first holding part 10A.

Thus, since the workpieces 202 (correctly, the workpiece stacked body 202A) are fully pinched by the first holding part 10A and the second holding part 10B, the workpieces 202 are fixed between the first holding part 10A and the second holding part 10B. Therefore, the robot 100 can move the workpieces 202 (workpiece stacked body 202A) upwardly by the first holding part 10A and the second holding part 10B.

Note that, when pinching the workpieces 202 (workpiece stacked body 202A) by the first holding part 10A and the second holding part 10B during the operation of Step S105, the control device 11 may operate the second arm 13B so that an upper end face of the protrusion 106a of the sixth member 106 of the second holding part 10B contacts an upper side part of the inner circumferential surface of the workpiece 202.

Next, the control device 11 operates the first arm 13A and the second arm 13B to be located upward, while the arms are holding the workpieces 202 (workpiece stacked body 202A) (Step S106; see Fig. 11). That is, the control device 11 operates the first arm 13A and the second arm 13B to move the workpieces 202 (workpiece stacked body 202A) upward so that the workpieces 202 are taken out from the box 201.

Next, the control device 11 operates the first arm 13A and the second arm 13B to place the workpieces 202 (workpiece stacked body 202A) on the belt conveyor 205 (Step S107), and then ends this program.

For example, the control device 11 rotates the first arm 13A and the second arm 13B so that the workpiece 202 are located above the belt conveyor 205, and then moves the first arm 13A and the second arm 13B downwardly to place the workpiece 202 on the belt conveyor 205. Then, the control device 11 operates the first arm 13A or the second arm 13B so that the first holding part 10A and the second holding part 10B separate from each other to release the holding state of the workpiece 202, and then ends this program.

Note that the control device 11 may operate the first arm 13A and the second arm 13B to be located at a given preset position (initial position), and then end this program. Alternatively, the control device 11 repeats this program, and when all the workpieces 202 accommodated in the box 201 have been conveyed, it may output information (e.g., an image, sound, light, etc.) indicative of the completion of the conveyance.

Since the robot 100 according to Embodiment 1 configured in this way includes the first holding part 10A having the notch 103a corresponding to the shape of the outer circumferential surface of the workpiece 202, and the plate-shaped second holding part 10B, it can easily hold and move the workpiece 202 having the cylindrical shape.

Moreover, in the robot 100 according to Embodiment 1, since the inner circumferential surface of the notch 103a of the first holding part 10A is formed in the tapered shape, it can fully contact the outer circumferential surface of the workpiece 202. Thus, the frictional resistance between the inner circumferential surface of the notch 103a and the outer circumferential surface of the workpiece 202 can be increased, and thereby the workpieces 202 can fully be held.

Moreover, in the robot 100 according to Embodiment 1, since the tip-end part of the sixth member 106 of the second holding part 10B is formed in the tapered shape, the tip-end part of the second holding part 10B can easily enter into the gap between an inner circumferential surface of the box 201 and one opening part of the workpiece 202, when taking out the workpieces 202 accommodated in the box 201. Thus, it can be prevented that, for example, the second holding part 10B crushes the outer circumferential surface of the workpiece 202 to prevent the deformation of the workpiece 202, thereby preventing the occurrence of poor appearance of the workpiece 202.

Moreover, when causing the principal surface of the second holding part 10B to contact one opening part of the workpiece 202, it can be prevented that the second holding part 10B crushes the outer circumferential surface of the workpiece 202 to prevent the deformation of the workpiece 202, thereby preventing the occurrence of poor appearance of the workpiece 202.

Moreover, in the robot 100 according to Embodiment 1, the protrusion 106a is formed in the principal surface of the sixth member 106 of the second holding part 10B. Thus, when moving the workpiece 202 upwardly, it can further be prevented that the workpiece 202 drops downwardly by the inner circumferential surface of the workpiece 202 contacting the upper end face of the protrusion 106a.

Moreover, in the robot 100 according to Embodiment 1, since the protrusion 106a of the second holding part 10B is formed in the tapered shape so that the thickness is reduced as it goes downwardly, it is prevented that the protrusion 106a crushes the outer circumferential surface of the workpiece 202, when causing the principal surface of the protrusion 106a to contact one opening part of the workpiece 202. Thus, the deformation of the workpiece 202 can be prevented and the occurrence of poor appearance of the workpiece 202 can be prevented.

Further, in the robot 100 according to Embodiment 1, the protrusion 106a of the second holding part 10B is formed so as to conform to the shape of one opening part of the workpiece 202. Thus, the outer circumferential surface of the protrusion 106a can fully contact the inner circumferential surface of the one opening part of the workpiece 202, and thereby the workpiece 202 can fully be held.

Note that although in Embodiment 1 the operation of the robot 100 which takes out the workpiece stacked body 202A accommodated in the box 201 and places it on the belt conveyor 205, is illustrated, but without being limited to this configuration, an operation in which the robot 100 holds one workpiece 202 put over sideways on a floor surface and conveys it may be performed.

### [Modification 1]

Next, a modification of the robot 100 according to Embodiment 1 is described.

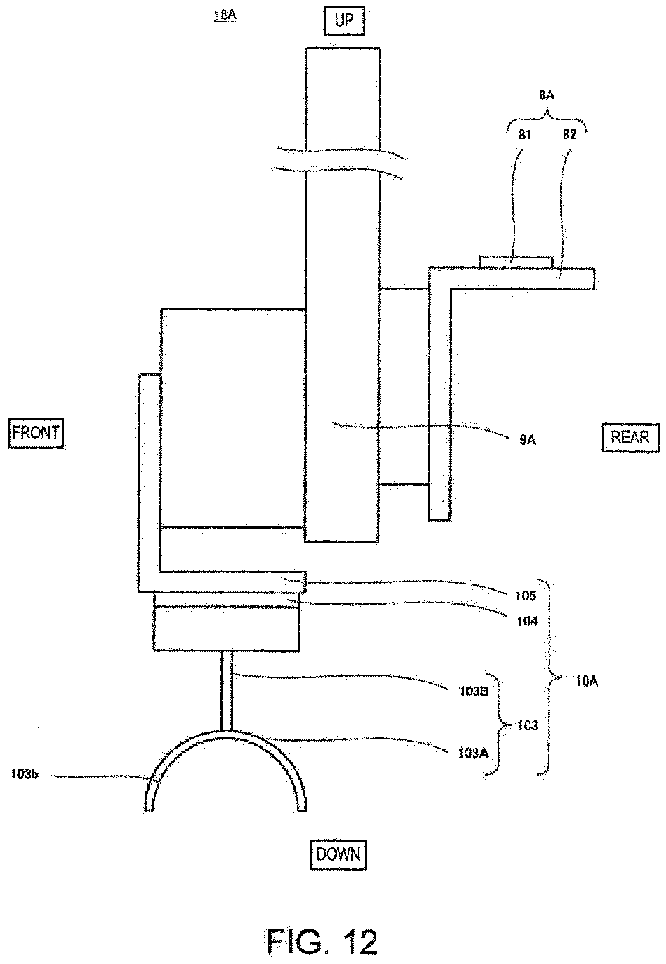

In the robot of Modification 1 in Embodiment 1, the first holding part is comprised of a bar-like member. Below, one example of the robot of Modification 1 is described with reference to Fig. 12.

Fig. 12 is a schematic view illustrating an outline configuration of a first hand part of the robot of Modification 1 in Embodiment 1. Note that, in Fig. 12, the up-and-down directions and the front-and-rear directions in the robot are expressed as up-and-down directions and front-and-rear directions in the figure.

As illustrated in Fig. 12, the robot 100 of Modification 1 has the same fundamental configuration as the robot 100 according to Embodiment 1, but the configuration of the third member 103 of the first holding part 10A differs. For example, the third member 103 has a first bar member 103A and a second bar member 103B, and the first bar member 103A is bent (curved) so as to conform to the shape of the outer circumferential surface of the workpiece 202. Moreover, the second bar member 103B connects the first bar member 103A with the fourth member 104. Note that the first bar member 103A may be directly connected to the fourth member 104.

Moreover, an inner circumferential surface 103b of the first bar member 103A constitutes the contact surface. Similar to the notch 103a of Embodiment 1, the inner circumferential surface 103b may incline as it goes from one end to the other end.

Even with the robot 100 of Modification 1 configured in this way, similar operation and effects as the robot 100 according to Embodiment 1 can be obtained.

### [Modification 2]

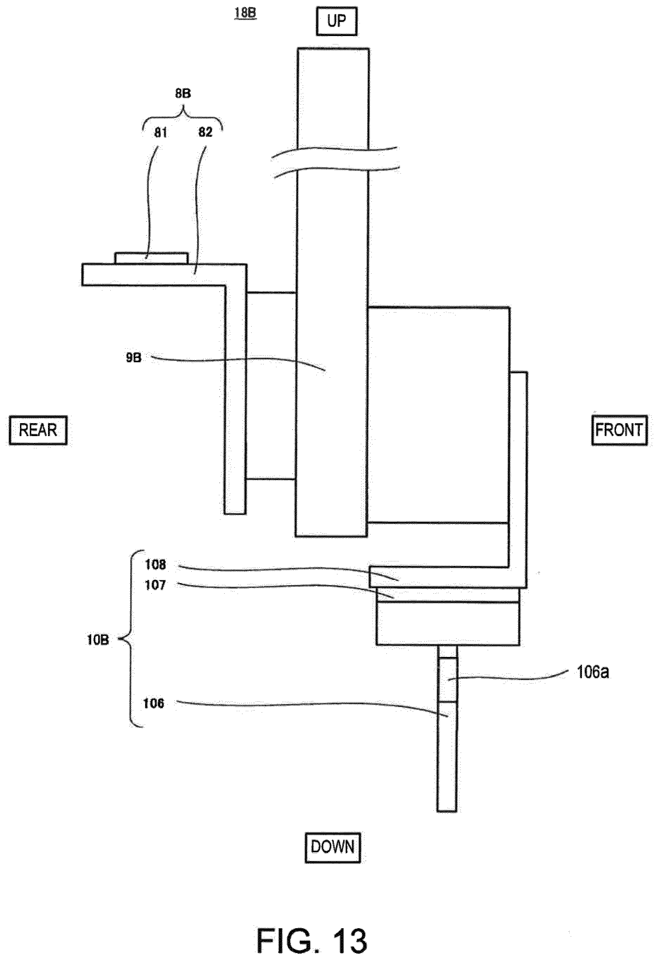

In a robot of Modification 2 in Embodiment 1, a second holding part is comprised of a bar-like member. Below, one example of the robot of Modification 2 is described with reference to Fig. 13.

Fig. 13 is a schematic view illustrating an outline configuration of the second hand part of the robot of Modification 2 in Embodiment 1. Note that, in Fig. 13, the up-and-down directions and the front-and-rear directions in the robot are expressed as up-and-down directions and front-and-rear directions in the figure.

As illustrated in Fig. 13, the robot 100 of Modification 2 has the same fundamental configuration as the robot 100 according to Embodiment 1, but it differs in that the sixth member 106 of the second holding part 10B is formed in a bar shape. Note that, in Modification 2, the form in which the sixth member 106 is comprised of a single bar member is adopted, but without being limited to this configuration, a form in which the sixth member 106 is comprised of a plurality of bar members may be adopted.

Even with the robot 100 of Modification 2 configured in this way, similar operation and effects as the robot 100 according to Embodiment 1 can be obtained.

It is apparent for a person skilled in the art that many improvements or other embodiments of the present disclosure are possible from the above description. Therefore, the above description is to be interpreted only as illustration, and it is provided in order to teach a person skilled in the art the best mode that implements the present disclosure. The details of the structures and/or the functions may substantially be changed without departing from the spirit of the present disclosure.

### INDUSTRIAL APPLICABILITY

Since the robot and the method of operating the same of the present disclosure can easily hold and move the object having the cylindrical shape, they are useful in industrial robot fields.

### DESCRIPTION OF REFERENCE CHARACTERS

- J1: Rotary Joint
- J2: Rotary Joint
- J3: Linear-motion Joint
- J4: Rotary Joint
- L1: Rotation Axis
- L2: Rotation Axis
- L3: Rotation Axis
- 8A: Fixing Part
- 8B: Fixing Part
- 9A: Intermediate Part
- 9B: Intermediate Part
- 10A: First Holding Part
- 10B: Second Holding Part
- 11: Control Device
- 11a: Processor
- 11b: Memory
- 11c: Servo Controller
- 12: Carriage
- 12a: Wheel
- 12b: Fixing Part
- 13A: First Arm
- 13B: Second Arm
- 15: Arm Part
- 15a: First Link
- 15b: Second Link
- 16: Base Shaft
- 17: Wrist Part
- 18A: First Hand Part
- 18B: Second Hand Part
- 20: Attaching Part
- 81: First Member
- 82: Second Member
- 100: Robot
- 101: First Member
- 102: Second Member
- 103: Third Member
- 103a: Notch
- 104: Fourth Member
- 105: Fifth Member
- 106: Sixth Member
- 106a: Protrusion
- 107: Seventh Member
- 108: Eighth Member
- 201: Box
- 202: Workpiece
- 202A: Workpiece Stacked Body
- 203: Pedestal
- 203A: Support Member
- 204: Imaging Device
- 205: Belt Conveyor

## Claims

1. A robot, comprising:
a first arm provided with a first holding part having a contact surface formed so as to conform to the shape of an outer circumferential surface of a cylindrical workpiece; and
a second arm provided with a second holding part formed into one of a plate shape and a bar shape.

2. The robot of claim 1, wherein the contact surface of the first holding part is formed so as to be inclined from one end to the other end.

3. The robot of claim 1, wherein the contact surface of the first holding part is provided with an elastic member.

4. The robot of any one of claims 1 to 3, wherein a tip-end part of the second holding part is formed in a tapered shape so that the thickness is reduced toward a tip end.

5. The robot of any one of claims 1 to 4, wherein a protrusion is formed in the second holding part.

6. The robot of claim 5, wherein the second holding part is formed in a plate shape, and
wherein the protrusion is formed so as to conform to the shape of an opening part of the cylindrical workpiece when seen in a normal direction of a principal surface of the second holding part.

7. The robot of any one of claims 1 to 6, further comprising a control device configured to operate the first arm so that the contact surface of the first holding part contacts the outer circumferential surface of the cylindrical workpiece, operate the second arm so that the second holding part contacts an opening part of the cylindrical workpiece, and then operate at least one of the first arm and the second arm so that the first holding part and the second holding part approach each other.

8. A method of operating a robot having a first arm and a second arm, the first arm being provided with a first holding part having a contact surface formed so as to conform to the shape of an outer circumferential surface of a cylindrical workpiece, and the second arm being provided with a second holding part formed into one of a plate shape and a bar shape, the method comprising:
(A) operating the first arm so that the contact surface of the first holding part contacts the outer circumferential surface of the cylindrical workpiece;
(B) operating the second arm so that the second holding part contacts an opening part of the cylindrical workpiece; and
(C) operating at least one of the first arm and the second arm so that the first holding part and the second holding part approach each other after performing the (A) and (B).

9. The method of claim 8, wherein the contact surface of the first holding part is formed so as to be inclined from one end to the other end.

10. The method of claim 8, wherein the contact surface of the first holding part is provided with an elastic member.

11. The method of any one of claims 8 to 10, wherein a tip-end part of the second holding part is formed in a tapered shape so that the thickness is reduced toward a tip end.

12. The method of any one of claims 8 to 11, wherein a protrusion is formed in the second holding part.

13. The method of claim 12, wherein the second holding part is formed in a plate shape, and
wherein the protrusion is formed so as to conform to the shape of the opening part of the cylindrical workpiece when seen in a normal direction of a principal surface of the second holding part.

14. The method of claim 12 or 13, wherein the (B) includes (B1) operating the second arm so that the protrusion of the second holding part slides on the opening part of the cylindrical workpiece.

15. The method of any one of claims 12 to 14, wherein the (C) includes (C1) operating the second arm so that an upper surface of the protrusion of the second holding part contacts an inner circumferential surface of the opening part of the cylindrical workpiece.
